# EUROPEAN PATENT APPLICATION

(11) **EP 4 804 142 A1**
(43) Date of publication of application: **09.09.2026**
(21) Application number: 26161265.9
(22) Date of filing: 27.02.2026
(51) Int. Cl.: G06V 10/82, G06N 3/045

(54) **SYSTEM AND METHOD WITH SELF-REFINEMENT NETWORK FOR ENHANCING VISUAL AUTOREGRESSIVE GENERATION**

(30) Priority: 05.03.2025 US 202519070909
(71) Applicant: Robert Bosch GmbH, 70442 Stuttgart (DE)
(72) Inventor: Mummadi, Chaithanya Kumar, Coraopolis, PA, 15108 (US); Qiu, Chen, Pittsburth, PA, 15209 (US); Zhou, Ziqi, Rochester, NY, 14618 (US); Wang, Jaimian, Studio City, CA, 91604 (US)

(57) **Abstract**

A computer-implemented method and system relate to computer vision and digital image generation via an autoregressive model. The method and system include receiving image pairs and a query image. The image pairs provide context for a given task to be performed with respect to the query image. An image encoder generates context tokens using the image pairs and the query image. An autoregressive model produces generated tokens using the context tokens. A token embedding layer generates token embeddings using the generated tokens. A refinement network generates refined embeddings using the token embeddings. The refined embeddings provide inter-token relationships with respect to the token embeddings. Refined tokens are generated using the refined embeddings. A new image is generated using the refined tokens. The new image corresponds to the query image with respect to the given task.

## Description

### TECHNICAL FIELD

This disclosure relates generally to computer vision, and more particularly to digital image generation via a visual autoregressive model with a refinement network.

### BACKGROUND

Autoregressive models have achieved remarkable success in recent years across nature language processing. For example, large language models (LLMs), which are based on autoregressive modeling, encode text as sequences of tokens and predict each token sequentially based on the preceding tokens. This next-token prediction paradigm effectively captures sequential dependencies and complex semantic relationships in the text while handling tasks like question answering and text generation.

Building on this success, recent works have extended autoregressive modeling to visual data. For example, the large vision model (LVM) encodes images (or video frames) as a sequence of tokens and uses next-token prediction to solve various image translation and generation tasks. The focus on in-context learning makes LVM well-suited to handle vision tasks that require contextual information for generating coherent and consistent outputs. Despite this progress, next-token prediction in LVM presents unique challenges to vision tasks. Spatial information in the images is globally distributed and meaningful relationships emerge only with the entire sequence of tokens. Therefore, generating tokens from the preceding sequence lacks holistic contextual cues that affects the consistency and semantic integrity. Furthermore, early errors propagate through the generation sequence and degrade visual fidelity and overall coherence.

### SUMMARY

The following is a summary of certain embodiments described in detail below. The described aspects are presented merely to provide the reader with a brief summary of these certain embodiments and the description of these aspects is not intended to limit the scope of this disclosure. Indeed, this disclosure may encompass a variety of aspects that may not be explicitly set forth below.

According to at least one aspect, a computer-implemented method includes receiving digital images. The digital images include image pairs and a query image. The image pairs provide context for a given task. The query image is input for the given task. The method includes generating, via an encoder, context tokens using pixels of the image pairs and the query image. The method includes generating, via an autoregressive model, generated tokens using the context tokens. The method includes generating, via a token embedding layer, token embeddings using the generated tokens. The method includes generating, via a refinement network, refined embeddings using the token embeddings. The refined embeddings provide inter-token relationships with respect to the token embeddings. Refined tokens are generated using the refined embeddings. The method includes generating, via a decoder, a new image using the refined tokens. The new image is an output of the given task based on the query image.

According to at least one aspect, a system includes one or more processors and one or more computer memory. The one or more processors are in data communication with the one or more computer memories. The one or more computer memories have computer readable data with instructions stored thereon. The computer readable data include instructions that, when executed by one or more processors, causes the one or more processors to perform a method. The method includes receiving digital images. The digital images include image pairs and a query image. The image pairs provide context for a given task. The query image is input for the given task. The method includes generating, via an encoder, context tokens using pixels of the image pairs and the query image. The method includes generating, via an autoregressive model, generated tokens using the context tokens. The method includes generating, via a token embedding layer, token embeddings using the generated tokens. The method includes generating, via a refinement network, refined embeddings using the token embeddings. The refined embeddings provide inter-token relationships with respect to the token embeddings. Refined tokens are generated using the refined embeddings. The method includes generating, via a decoder, a new image using the refined tokens. The new image is an output of the given task based on the query image.

These and other features, aspects, and advantages of the present invention are discussed in the following detailed description in accordance with the accompanying drawings throughout which like characters represent similar or like parts. Furthermore, the drawings are not necessarily to scale, as some features could be exaggerated or minimized to show details of particular components.

### BRIEF DESCRIPTION OF THE FIGURES

FIG. 1A is a flow diagram of an example of a process relating to generating a new image via a visual autoregressive system with self-refinement according to an example embodiment of this disclosure.
FIG. 1B is a flow diagram of an example of a process relating to training a refinement network of a visual autoregressive system with self-refinement according to an example embodiment of this disclosure.
FIG. 2 illustrates an example of a refinement network according to an example embodiment of this disclosure.
FIG. 3 is a graph that compares a visual autoregressive system with self-refinement and a visual autoregressive system without self-refinement according to an example embodiment of this disclosure.
FIG. 4 is a block diagram of an example of system that includes a visual autoregressive system with self-refinement according to at least one example embodiment of this disclosure.
FIG. 5 is a diagram of an interaction between a computer-controlled machine and a control system according to at least one example embodiment of this disclosure.
FIG. 6 is a diagram of the control system of FIG. 5 that is configured to control a mobile machine, which is at least partially or fully autonomous, according to at least one example embodiment of this disclosure.
FIG. 7 is a diagram of the control system of FIG. 5 that is configured to control a manufacturing machine of a manufacturing system, such as part of a production line, according to at least one example embodiment of this disclosure.
FIG. 8 depicts a schematic diagram of the control system of FIG. 5 that is configured to control a monitoring system according to at least one example embodiment of this disclosure.
FIG. 9 depicts a schematic diagram of the control system of FIG. 5 that is configured to control a medical imaging system according to at least one example embodiment of this disclosure.

### DETAILED DESCRIPTION

The embodiments described herein, which have been shown and described by way of example, and many of their advantages will be understood by the foregoing description, and it will be apparent that various changes can be made in the form, construction, and arrangement of the components without departing from the disclosed subject matter or without sacrificing one or more of its advantages. Indeed, the described forms of these embodiments are merely explanatory. These embodiments are susceptible to various modifications and alternative forms, and the following claims are intended to encompass and include such changes and not be limited to the particular forms disclosed, but rather to cover all modifications, equivalents, and alternatives falling with the spirit and scope of this disclosure.

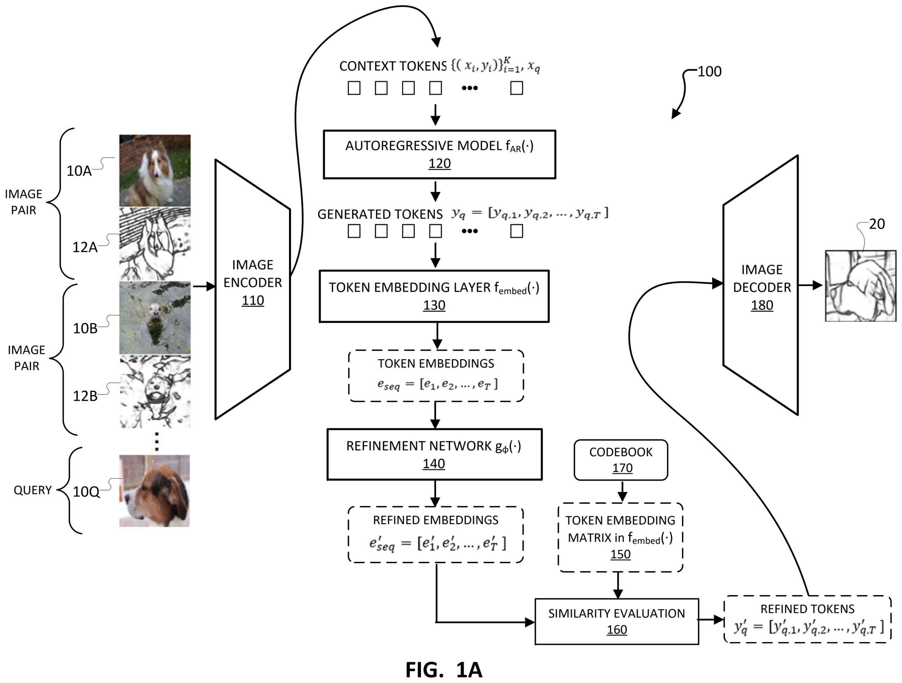

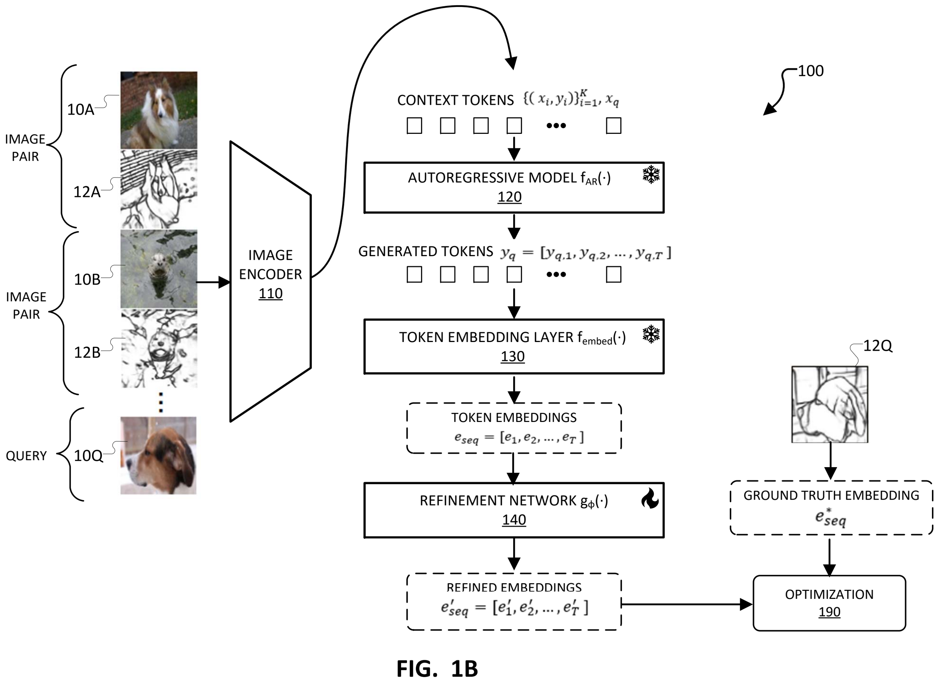

FIG. 1A and FIG. 1B illustrate a system 100 that includes a visual autoregressive system with self-refinement. The system 100 addresses and overcomes some of the aforementioned challenges relating to the LVM. For example, the system 100 includes a novel refinement process that operates directly on the output tokens ("generated tokens"), which are generated via the autoregressive model 120, while keeping the autoregressive model 120 untouched (see Figure 1). That is, the refinement process does not modify the autoregressive model 120 itself. Also, the system 100 introduces a refinement function, *g_{ϕ}*, to jointly reassess all the generated tokens, which are output by the autoregressive model 120, by leveraging global context and inter-token relationships. This refinement process enhances the complex spatial correspondences inherent in visual sequences. In addition, the refinement process refines all generated tokens of the autoregressive model 120 jointly. The refinement process leverages global context and relationship across all generated tokens to mitigate errors from sequential generation. Also, this refinement process adjusts for early errors and improves visual coherence. The system 100 is advantageous in integrating this refinement process with the visual autoregressive model 120 and bridging the gap between sequential modeling and need for global context awareness in vision generation tasks.

FIG. 1A illustrates an example of a generative process of the system 100 whereas FIG. 1B illustrates an example of a training process of the system 100. In FIG. 1A, the system 100 includes at least an image encoder 110, an autoregressive model 120, a token embedding layer 130, a refinement network 140, a token embedding matrix 150, a similarity evaluation 160, a codebook 170, and an image decoder 180. The system 100 is configured to handle various image translation and generation tasks through in-context learning. In this regard, as shown in FIG. 1A, the system 100 is configured to receive input data, which includes digital images comprising pixels. The input data includes at least a number of image pairs and a query image. The image pairs provide context for the specific task that is to be performed on the query image to generate the new image. The specific task may include inpainting, colorization, edge detection, an applicable image translation task, or an applicable image generation task.

In FIG. 1A and FIG. 1B, each image pair includes a digital image of a first type and another digital image of a second type, where the second type is related to the first type via a specific task, such as image translation/generation. For instance, in the non-limiting example shown in FIG. 1A and FIG. 1B, the first type is a red, green, blue (RGB) image and the second type is a sketch image. More specifically, with respect to the non-limiting examples of FIG. 1A and FIG. 1B, the image pairs include at least (i) a first image pair that includes a first RGB image 10A of a front view of a first dog and a corresponding first sketch image 12A of the front view of the first dog and (ii) a second RGB image 10B of a front view of a second dog and a corresponding second sketch image 12B of the front view of the second dog. In this case, the image pairs may further include one or more other image pairs (not shown). Meanwhile, the query image 10Q is an RGB image of a side profile of a dog's face. In FIG. 1A and FIG. 1B, as a non-limiting example, the image pairs provide context for the specific task of generating a sketch image using an RGB image as a basis for generating the sketch image.

The image encoder 110 is configured to receive the input data. As an example, the image encoder 110 comprises a Vector Quantized Generative Adversarial Network (VQGAN) encoder. The image encoder 110 is configured to generate tokens (which may be referred to as "context tokens") using the image pairs and the query image. Specifically, the context tokens include K demonstration token pairs ${\left\{\left({x}_{i}, {y}_{i}\right)\right\}}_{i = 1}^{K}$ and query image tokens *x_{q}.* These context tokens are then transmitted to the autoregressive model 120.

As an overview, autoregressive modeling aims to maximize the likelihood of a discrete token sequence *x =* [*x*₁, *x*₂, ... , *x_{T}* ] using a forward autoregressive factorization, where each token, *xₜ*, is predicted based on all preceding tokens [*x*₁, *x₂*, ... , *x*_{*t*-1}], as indicated by equation 1. In equation 1, *p_{θ}* represents a token distribution predictor parameterized by *θ*. This sequential next-token prediction captures dependencies within the data and thus dynamically adapts to new tasks based on the contextual information. ${max}_{θ} {p}_{θ} \left(x\right) = {\prod }_{t = 1}^{T} {p}_{θ} \left(\left.{x}_{t}\right|{x}_{1},{x}_{2},…,{x}_{t - 1}\right)$

This disclosure recognizes that a major limitation of next-token prediction for computer vision lies in the absence of an intrinsic causal order for image tokens. Unlike text, where tokens of text follow a natural sequential causal order (e.g., left-to-right in a sentence), images lack such intrinsic structure. Instead, information is spatially distributed across pixels in the image and their relationships often depend on the global context. In addition, this disclosure further recognizes that approaches that generate each token based solely on preceding tokens and disregards useful information from future tokens that could provide additional contextual coherence. This sequential dependency leads to suboptimal outputs, particularly for complex visual tasks the requires holistic context of the entire image. Thus, the system 100 addresses these technical issues and introduces global context to each token which leads to improved visual coherence and fidelity.

Referring to FIG. 1A and FIG. 1B, the autoregressive model 120 is configured to receive the context tokens from the image encoder 110. The autoregressive model 120 is configured to produce generated tokens iteratively. Specifically, the autoregressive model 120 is configured to dynamically adapt to a target task (e.g., inpainting, colorization, etc.), and produce generated tokens *y_{q}* = [*y*_{*q,*1}*, y*_{*q*,2}, ... , *y_{q,T}* ] sequentially using a conditional generation function *f_{AR}* with parameters θ, as indicated in equation 2. Specifically, *f_{AR}* is iteratively applied to generate the target tokens *y_{q}*, conditioned on the query and the context. The autoregressive model 120 is configured to produce output tokens (which may be referred to as "generated tokens") using the context tokens. ${y}_{q , t} = \left\{\begin{matrix}{f}_{AR} \left({x}_{q}, {\left\{\left({x}_{i}, {y}_{i}\right)\right\}}_{i = 1}^{K}, θ\right) & t = 1 \\ {f}_{AR} \left({y}_{q , < t},{x}_{q ,}{\left\{\left({x}_{i}, {y}_{i}\right)\right\}}_{i = 1}^{K};θ\right) & t > 1\end{matrix}\right.$

Next, as shown in FIG. 1A and FIG. 1B, the generated tokens are transmitted to the token embedding layer 130 for latent refinement. Specifically, the autoregressive generated tokens *y_{q}* are processed via token embedding layer 130. The token embedding layer 130 is configured to map the generated tokens *y_{q} =* [*y*_{*q,*1}, *y*_{*q*,2}, ... , *y_{q,T}* ] to token embeddings *e_{seq} =* [*e*₁, *e*₂, *..., e_{T}* ]*.* The token embedding layer 130 generates the token embeddings using the generated tokens.

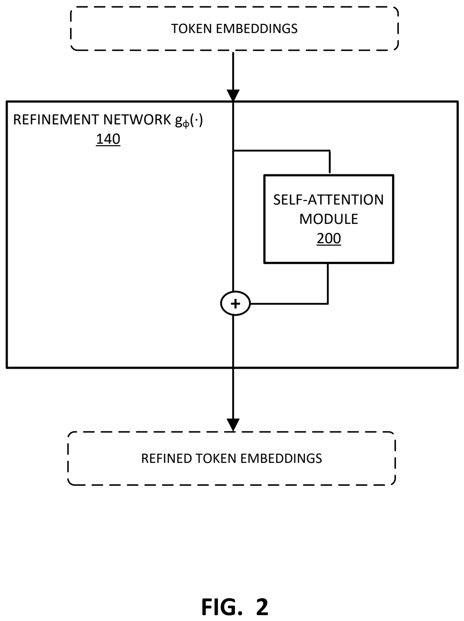

Also, the system 100 includes an advantageous process of refining the sequentially generated visual tokens *y_{q}*. While these generated tokens may lack global context, they serve as a strong prior for the target generation. Building on this insight, the system 100 includes a post-processing technique that includes the refinement network 140 with a refinement function to jointly transform all the generated tokens *y_{q} =* [*y*_{*q,*1}, *y*_{*q*,2}, ... , *y_{q,T}* ] into refined tokens ${y}_{q}^{′} = \left[{y}_{q , 1}^{′},{y}_{q , 2}^{′},…,{y}_{q , T}^{′}\right]$ , while keeping the autoregressive generation process untouched. By incorporating global context, the refinement function captures holistic relationships across all the generated tokens, and thus significantly enhances the quality and coherence of the final visual output (e.g., new image 20). The refinement process involves (i) refining the generated token embeddings with a self-attention module 200 (FIG. 2) and (ii) decoding the refined embeddings to discrete tokens (or "refined tokens") via nearest-neighbor search.

FIG. 2 illustrates an example of the refinement network 140, which is configured to improve the generated tokens *y_{q}* in the embedding space by yielding refined embeddings ${e}_{seq}^{′}$ using the token embeddings of those generated tokens. The refinement network 140 includes a function, *g_{ϕ}*, parameterized by *ϕ*. The refinement network 140 jointly processes the token embeddings to produce embeddings (which may be referred to as "refined embeddings"). The refined embeddings ${e}_{seq}^{′} = \left[{e}_{1}^{′},{e}_{2}^{′},…,{e}_{T}^{′}\right]$ are generated by the refinement network 140 via equation 3. ${e}_{seq}^{′} = {g}_{ϕ} \left({e}_{seq}\right) = {e}_{seq} + SelfAttention \left({e}_{seq}; ϕ\right)$

As shown in FIG. 2 and equation 3, the refinement network 140 includes at least one self-attention module 200. The self-attention module 200 captures spatial relationships, semantic coherence, and long-range dependencies across the sequence. As an example, the self-attention module 200 is a software mechanism that includes three main components: queries (Q), keys (K), and values (V). The self-attention module 200 also uses positional encoding and feed-forward neural networks. The self-attention module 200 is configured to determine the relative importance of each component in a sequence relative to the other components in that sequence. As shown in FIG. 2 and equation 3, the refinement network 140 generates refined embeddings ${e}_{seq}^{′}$, which is a sum of (i) a result (which may be referred to as "output embeddings") of the self-attention module 200 using *e_{seq}* and *ϕ* as inputs and (ii) the token embeddings *e_{seq}*. Importantly, the refinement network 140 is configured to process all the embeddings simultaneously to adjust for inconsistencies and deviations introduced during sequential generation.

In addition, the system 100 is configured to perform a decoding process. As a general overview, the decoding process is performed to transform the refined embeddings ${e}_{seq}^{′}$ into discrete refined tokens ${y}_{q}^{′}$ to ultimately generate the output (e.g. new image 20). As a non-limiting example, in FIG. 1A, the system 100 generates a new image 20 that is a digital image with pixels that displays a sketch version of the side profile of the dog of the query image 10Q. In this regard, the system 100 performs a specific task of generating a sketch image as the new image 20 using the query image 10Q, which is an RGB image, as a basis for this sketch image. In this example, the system 100 performs an image generation task of converting the query image 10Q, which is an RGB image, into a new image 20, which is a sketch image.

Referring to FIG. 1A, with respect to generating this new image 20, the decoding process involves token embedding matrix 150, similarity evaluation 160, and codebook 170. The similarity evaluation 160 is performed using the token embedding matrix 150 and the codebook 170. The token embedding matrix 150 is associated with f*_{embed}*(·) of the token embedding layer 130 and also indices of the codebook 170. The similarity evaluation 160 includes performing at least one similarity metric (e.g., cosine similarity or the like). The codebook 170 comprises a learned dictionary or vocabulary of discrete embedding vectors associated with the image encoder 110 and the image decoder 180 (e.g., the VQGAN encoder and the VQGAN decoder).

During decoding, each refined embedding is compared to the discrete token embeddings that are associated with or represent indices of the vocabulary of the codebook 170. Specifically, each index from the codebook 170 is mapped with respect to the token embedding layer 130 to produce a token embedding vector in the token embedding matrix 150. The token embedding matrix 150 has a shape of (V, D), where V represents the size or total number of the vocabulary of the codebook 170 and D represents the dimensionality of each token embedding vector. Then, using a similarity metric (e.g., cosine similarity), the system 100 performs a similarity evaluation 160 and identifies the nearest token embedding for each refined embedding. By selecting the nearest and most similar token embeddings from the token embedding matrix 150 for the refined embeddings, the system 100 ensures that the selected indices or refined tokens from the codebook 170 are aligned with the refined embeddings. The selected indices may be referred to as the refined tokens. Finally, these refined tokens are passed through the image decoder 180 (e.g., a VQGAN decoder) to generate the new image 20. The image decoder 180 is configured to generate at least one new image using the refined tokens.

The codebook 170 includes a number (represented by "V") of entries. Each row of the token embedding matrix 150 is directly tied to or directly refers to an entry in the codebook 170. For example, if the codebook 170 has V entries, then the token embedding matrix 150 has a size (V, D), where V is the total number of indices (i.e., discrete refined tokens) and where D is the dimensionality of each token embedding. Also, for instance, the i-th entry of the codebook 170 corresponds to the i-th row of the token embedding matrix 150, where i represents a number. The token embedding matrix 150 is configured such that when a particular token embedding (i.e., an embedding vector) is selected based on a similarity evaluation 160, then the particular index (i.e., a particular refined token), which is associated with that token embedding and which is also associated with the codebook 170, is obtained. In this regard, each entry in the codebook 170 corresponds to an index (which may be referred to as a refined token), and that index is represented by a row in the token embedding matrix 150. So, when a particular refined token is selected from the codebook 170, then the associated embedding vector in the token embedding matrix 150 is selected, or vice versa.

As discussed above, given the token embeddings of all tokens in the codebook 170, the system 100 identifies the nearest token embedding to each refined embedding based on similarity evaluation 160 using a similarity metric (e.g., cosine similarity, etc.). The token associated with the closest token embedding is selected as the refined token ${y}_{q}^{′}$ for the given refined embedding. The codebook 170 is a fixed-size lookup table of indices (or "tokens") and their corresponding token embedding vectors. Once determined, the refined tokens are decoded into at least one image (e.g., new image 20) using the image decoder 180. For example, the image decoder 180 comprises a VQGAN decoder.

Referring to FIG. 1B, with respect to the training process of the refinement network 140, the system 100 includes the image encoder 110, the autoregressive model 120, the token embedding layer 130, the refinement network 140, and the optimization process 190. As shown in FIG. 1B, the training process is similar to the generative process with respect to generating refined embeddings. However, during the training process, the system 100 uses the refined embeddings, which are generated via the refinement network 140, to optimize the refinement network 140. Also, during the training process, as shown in FIG. 1B, the autoregressive model 120 and the token embedding layer 130 are untouched (e.g., not modified) and frozen (as indicated by the snowflake icon) while parameters of the refinement network 140 are trained and updated (as indicated by the fire icon) via the optimization process 190. The optimization process 190 includes minimizing a difference of a ground truth embedding ( ${e}_{seq}^{∗}$) relative to a refined embedding ( ${e}_{seq}^{′}$). The ground truth embedding is generated using a digital image that serves as ground truth. As a non-limiting example, for instance, in FIG. 1B, the ground-truth image 12Q is a digital image that displays a result of a specific task (e.g., image translation/image generation) based on the query image 10Q. In this case, the ground-truth image 12Q is a sketch version of the query image 10Q, which is an RGB image that displays the side profile of that dog.

During the training process, the system 100 uses the ground truth embedding for supervision for minimizing the cosine distance. Specifically, as an example, the refinement network 140 includes parameters ϕ, which are optimized by minimizing the cosine distance between the sequence of refined embeddings ${e}_{seq}^{′}$ and the ground truth token embeddings ${e}_{seq}^{∗}$*,* as indicated in equation 4. Also, the refinement network 140 provides a refinement function and operates as an independent plug-in module alongside a pretrained autoregressive model 120 without modifying the original architecture. This lightweight formulation aligns the refined embeddings with the target distribution, thereby improving the fidelity and coherence of the final output (e.g., new image 20) of the system 100. ${min}_{ϕ} \frac{1}{T} {\sum }_{t = 1}^{T} \left(1-\frac{{e}_{t}^{′} ⋅ {e}_{t}^{∗}}{{\left‖{e}_{t}^{′}\right‖}_{2} {\left‖{e}_{t}^{∗}\right‖}_{2}}\right)$

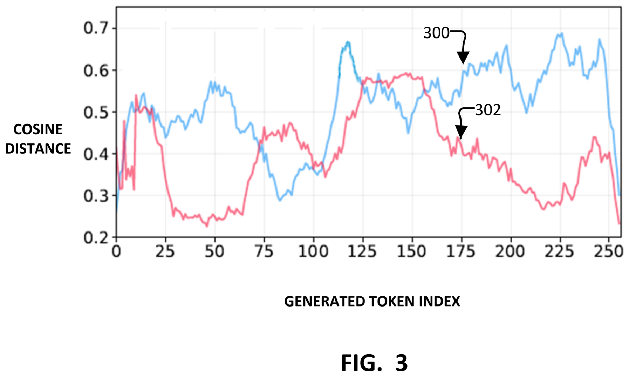

FIG. 3 illustrates a graph, which compares the cosine distance of generated token embeddings and the ground-truth token embeddings with respect to inpainting for (i) the LVM with LoRA and (ii) the LVM with self-refinement. Specifically, in FIG. 3, the results without self-refinement are plotted in blue color and labeled as plot 300 while the results with self-refinement are plotted in red color and labeled as plot 302. As shown in FIG. 3, the graph includes an x-axis relating to the generated token index and a y-axis relating to the cosine distance. Notably, the LVM with self-refinement (i.e., plot 302) achieves significantly reduced cosine distance for early tokens (25 < t < 70) and later tokens (t > 160), where t represents the generated token index, compared to the LVM with LoRA (i.e., plot 300). As shown in FIG. 3, self-refinement reduces the error accumulation especially for latter tokens (t > 160). As demonstrated by these results, the self-refinement process corrects early errors and mitigates error accumulation during generation.

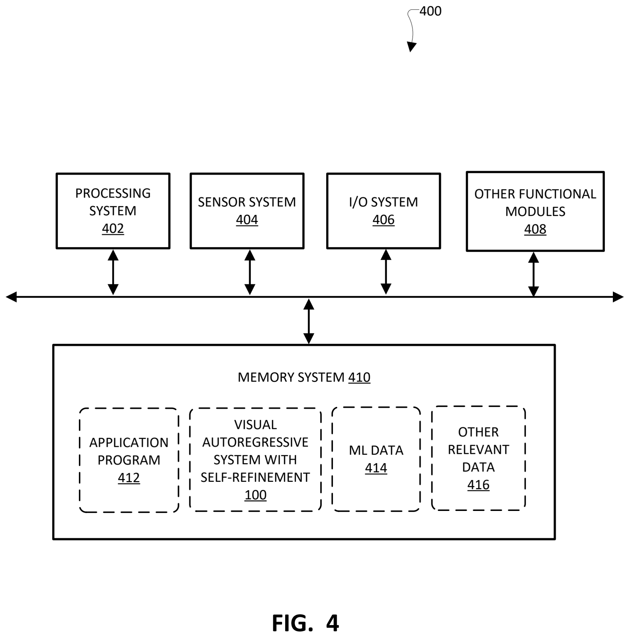

FIG. 4 is a block diagram of an example of a system 400 that includes the system 100. The system 400 includes at least a processing system 402. The processing system 402 includes at least one processing device. For example, the processing system 402 may include an electronic processor, a central processing unit (CPU), a graphics processing unit (GPU), a tensor processing unit (TPU), a microprocessor, a field-programmable gate array (FPGA), an application-specific integrated circuit (ASIC), any processing technology, or any number and combination thereof. The processing system 402 is operable to provide the functionality as described herein.

The system 400 includes at least one sensor system 404. The sensor system 404 includes one or more sensors. For example, the sensor system 404 includes at least an image sensor, such as a camera that generates digital images. The sensor system 404 may include at least one other type of sensor (e.g., radar, LiDAR, infrared, etc.) to obtain additional sensor data, whereby the sensor system 404 may generate digital images based on this additional sensor data. The sensor system 404 is operable to communicate with one or more other components (e.g., processing system 402 and memory system 410) of the system 400. For example, the sensor system 404 may provide sensor data (e.g., digital images), which is then processed by the processing system 402. The sensor system 404 is local, remote, or a combination thereof (e.g., partly local and partly remote) with respect to one or more components of the system 400. Upon receiving the sensor data (e.g., one or more digital images), the processing system 402 is configured to process this sensor data (e.g. digital images) in connection with the application program 412, the other relevant data 416, or any number and combination thereof.

The system 400 includes a memory system 410, which is operatively connected to the processing system 402. In this regard, the processing system 402 is in data communication with the memory system 410. The memory system 410 includes at least one non-transitory computer readable storage medium, which is configured to store and provide access to various data to enable at least the processing system 402 to perform the operations and functionality, as disclosed herein. The memory system 410 comprises a single memory device or a plurality of memory devices. The memory system 410 may include electrical, electronic, magnetic, optical, semiconductor, electromagnetic, or any suitable storage technology. For instance, the memory system 410 may include random access memory (RAM), read only memory (ROM), flash memory, a disk drive, a memory card, an optical storage device, a magnetic storage device, a memory module, any suitable type of memory device, or any number and combination thereof.

The memory system 410 includes computer readable data that, when executed by the processing system 402, is configured to perform at least the functions disclosed in this disclosure. The computer readable data may include instructions, code, routines, various related data, software technology, or any number and combination thereof. In this regard, the memory system 410 includes computer readable data for the application program 412. The application program 412 is configured to perform the functions discussed in this disclosure such as the processes relating to the system 100. For example, the application program 412 may relate to system 100 with respect to training, tuning, testing, deploying, employing, or any combination thereof. The application program 412 may also be configured to apply the output data of the system 100 to a computer vision application.

The memory system 410 includes computer readable data for the system 100, which includes the visual autoregressive system with self-refinement. This computer readable data for the system 100, when executed by the processing system 402, is configured to perform the operations and functions as discussed, for example, in this disclosure (e.g., FIG. 1A, FIG. 1B, and FIG. 2). The memory system 410 includes computer readable data for machine learning (ML) data 414. The ML data 414 includes various data (e.g., training data, digital images, parameters, tokens, embeddings, codebook 170, etc.). The memory system 410 includes computer readable data for the other relevant data 416. The other relevant data 416 provides various data (e.g., operating system, etc.), which enables the system 400 and/or the processing system 402 to perform the functions as discussed herein. In addition, the system 400 may include one or more input/output (I/O) system 406 comprising one or more I/O devices (e.g., display device, microphone, speaker, etc.).

In addition, the system 400 includes other functional modules 408, such as any appropriate hardware, software, or combination thereof that assist with or contribute to the functioning of the system 400 and the system 100. For example, the other functional modules 408 include communication technology (e.g., wired communication technology, wireless communication technology, or a combination thereof) that enables components of the system 400 to communicate with each other and/or one or more other computing devices (not shown), e.g., mobile communication device, smart phone, laptop, tablet, server, a cloud computing system, etc.

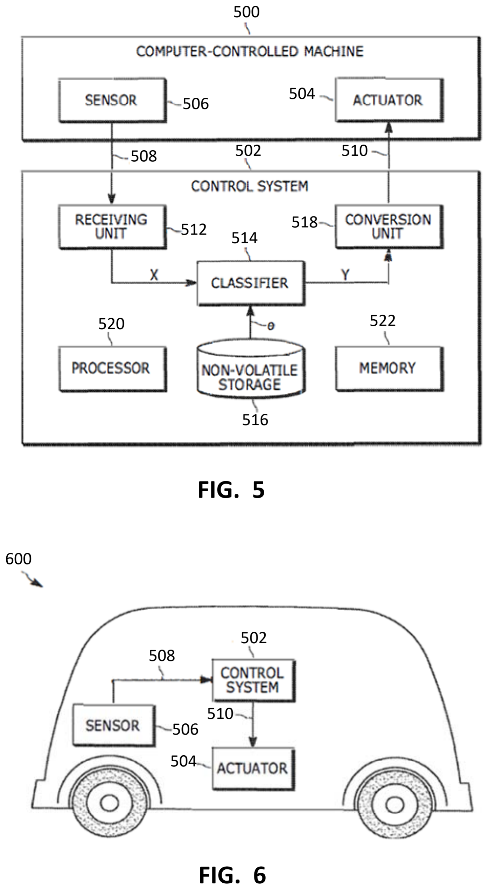

FIG. 5 depicts a schematic diagram of an interaction between computer-controlled machine 500 and control system 502 according to another example embodiment. Computer-controlled machine 500 includes actuator 504 and sensor 506. Actuator 504 may include one or more actuators and sensor 506 may include one or more sensors. Sensor 506 is configured to sense a condition of computer-controlled machine 500. Sensor 506 may be configured to encode the sensed condition into sensor signals 508 and to transmit sensor signals 508 to control system 502. A non-limiting example of sensor 506 includes video, radar, LiDAR, an ultrasonic sensor, an image sensor, an audio sensor, a motion sensor, etc. In some embodiments, sensor 506 is an image sensor or an optical sensor configured to provide digital images of an environment proximate to computer-controlled machine 500.

Control system 502 is configured to receive sensor signals 508 from computer-controlled machine 500. As set forth below, control system 502 may be further configured to compute actuator control commands 510 depending on the sensor signals and to transmit actuator control commands 510 to actuator 504 of computer-controlled machine 500.

As shown in FIG. 5, control system 502 includes receiving unit 512. Receiving unit 512 may be configured to receive sensor signals 508 from sensor 506 and to transform sensor signals 508 into input signals x. In an alternative embodiment, sensor signals 508 are received directly as input signals x without receiving unit 512. Each input signal x may be a portion of each sensor signal 508. Receiving unit 512 may be configured to process each sensor signal 508 to product each input signal x. Input signal x may include data corresponding to a digital image recorded by sensor 506.

Control system 502 includes classifier 514. In this example, the classifier 514 is configured to use at least the new digital images generated by the system 100 (FIG. 1A). The classifier 514 may be configured to classify input signals x into one or more labels using ML algorithms based at least on the new images, which are generated via the system 100 (FIG. 1A) based on the sensor signals 508. In this regard, the system 100 is trained with and employed with digital images (i.e., image pairs and query image) that relate to a specific task for generating new digital images that augment, improve, and/or relate to performing classification for a particular application (e.g., autonomous driving systems, manufacturing systems, security systems, etc.) Classifier 514 is configured to be parametrized by parameters θ. Parameters θ may be stored in and provided by non-volatile storage 516. Classifier 514 is configured to determine output signals y from input signals x. Each output signal y includes information that assigns one or more labels to each input signal x. Classifier 514 may transmit output signals y to conversion unit 518. Conversion unit 518 is configured to covert output signals y into actuator control commands 510. Control system 502 is configured to transmit actuator control commands 510 to actuator 504, which is configured to actuate computer-controlled machine 500 in response to actuator control commands 510. In some embodiments, actuator 504 is configured to actuate computer-controlled machine 500 based directly on output signals y.

Upon receipt of actuator control commands 510 by actuator 504, actuator 504 is configured to execute an action corresponding to the related actuator control command 510. Actuator 504 may include a control logic configured to transform actuator control commands 510 into a second actuator control command, which is utilized to control actuator 504. In one or more embodiments, actuator control commands 510 may be utilized to control a display instead of or in addition to an actuator.

In some embodiments, control system 502 includes sensor 506 instead of or in addition to computer-controlled machine 500 including sensor 506. Control system 502 may also include actuator 504 instead of or in addition to computer-controlled machine 500 including actuator 504. As shown in FIG. 5, control system 502 also includes processor 520 and memory 522. Processor 520 may include one or more processors. Memory 522 may include one or more memory devices. The classifier 514 of one or more embodiments may be implemented by control system 502, which includes non-volatile storage 516, processor 520, and memory 522.

Non-volatile storage 516 may include one or more persistent data storage devices such as a hard drive, optical drive, tape drive, non-volatile solid-state device, cloud storage or any other device capable of persistently storing information. Processor 520 may include one or more devices selected from high-performance computing (HPC) systems including high-performance cores, graphics processing units, microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on computer-executable instructions residing in memory 522. Memory 522 may include a single memory device or a number of memory devices including, but not limited to, RAM, ROM, volatile memory, non-volatile memory, static random access memory (SRAM), dynamic random access memory (DRAM), flash memory, cache memory, or any other device capable of storing information.

Processor 520 is configured to read into memory 522 and execute computer-executable instructions residing in non-volatile storage 516 and embodying one or more ML algorithms and/or methodologies of one or more embodiments. Non-volatile storage 516 may include one or more operating systems and applications. Non-volatile storage 516 may store compiled and/or interpreted from computer programs created using a variety of programming languages and/or technologies, including, without limitation, and either alone or in combination, Java, C, C++, C#, Objective C, Fortran, Pascal, Java Script, Python, Perl, and PL/SQL.

Upon execution by processor 520, the computer-executable instructions of non-volatile storage 516 may cause control system 502 to implement one or more of the ML algorithms and/or methodologies to employ the classifier 514 as disclosed herein. Non-volatile storage 516 may also include ML data (including model parameters) supporting the functions, features, and processes of the one or more embodiments described herein.

The program code embodying the algorithms and/or methodologies described herein is capable of being individually or collectively distributed as a program product in a variety of different forms. The program code may be distributed using a computer readable storage medium having computer readable program instructions thereon for causing a processor to carry out aspects of one or more embodiments. Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Computer readable program instructions may be downloaded to a computer, another type of programmable data processing apparatus, or another device from a computer readable storage medium or to an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions, acts, and/or operations specified in the flowcharts or diagrams. In certain alternative embodiments, the functions, acts, and/or operations specified in the flowcharts and diagrams may be re-ordered, processed serially, and/or processed concurrently consistent with one or more embodiments. Moreover, any of the flowcharts and/or diagrams may include more or fewer nodes or blocks than those illustrated consistent with one or more embodiments. Furthermore, the processes, methods, or algorithms can be embodied in whole or in part using suitable hardware components, such as ASICs, FPGAs, state machines, controllers or other hardware components or devices, or a combination of hardware, software and firmware components.

FIG. 6 depicts a schematic diagram of control system 502 configured to control vehicle 600, which may be at least a partially autonomous vehicle or a partially autonomous robot. Vehicle 600 includes actuator 504 and sensor 506. Sensor 506 may include one or more image sensors, video sensors, cameras, radar sensors, ultrasonic sensors, LiDAR sensors, position sensors (e.g. Global Positioning System), etc. One or more of the one or more specific sensors may be integrated into vehicle 600. Alternatively or in addition to one or more specific sensors identified above, sensor 506 may include a software module configured to, upon execution, determine a state of actuator 504. One non-limiting example of a software module includes a weather information software module configured to determine a present or future state of the weather proximate to the vehicle 600 or at another location.

The classifier 514 of control system 502 of vehicle 600 may be configured to classify objects in the vicinity of vehicle 600 dependent on input signals x. In such an embodiment, output signal y may include information classifying or characterizing objects in a vicinity of the vehicle 600. Actuator control command 510 may be determined in accordance with this information. The actuator control command 510 may be used to navigate the vehicle 600 and avoid collisions based on the classifications provided by classifier 514.

In some embodiments, the vehicle 600 is an at least partially autonomous vehicle or a fully autonomous vehicle. The actuator 504 may be embodied in a brake, a propulsion system, an engine, a drivetrain, a steering of vehicle 600, etc. Actuator control commands 510 may be determined such that actuator 504 is controlled such that vehicle 600 avoids collisions with detected objects. Detected objects may also be identified and classified according to what the classifier 514 deems them most likely to be, such as pedestrians, trees, any suitable labels, etc. The actuator control commands 510 may be determined depending on the classification of objects from digital images generated via the sensors 506.

In some embodiments where vehicle 600 is at least a partially autonomous robot, vehicle 600 may be a mobile robot that is configured to carry out one or more functions, such as flying, swimming, diving, stepping, or another mobile action. The mobile robot may be a lawn mower, which is at least partially autonomous, or a cleaning robot, which is at least partially autonomous. In such embodiments, the actuator control command 510 may be determined such that a propulsion unit, steering unit and/or brake unit of the mobile robot may be controlled such that the mobile robot may navigate and/or avoid collisions with objects according to classifications provided by the classifier 514.

In some embodiments, vehicle 600 is an at least partially autonomous robot in the form of a gardening robot. In such embodiment, vehicle 600 may use an optical sensor as sensor 506 to determine a state of plants in an environment proximate to vehicle 600. Actuator 504 may be a nozzle configured to spray chemicals. Depending on an identified species and/or an identified state of the plants via the classifier 514, actuator control command 510 may be determined to cause actuator 504 to spray the plants with a suitable quantity of suitable chemicals.

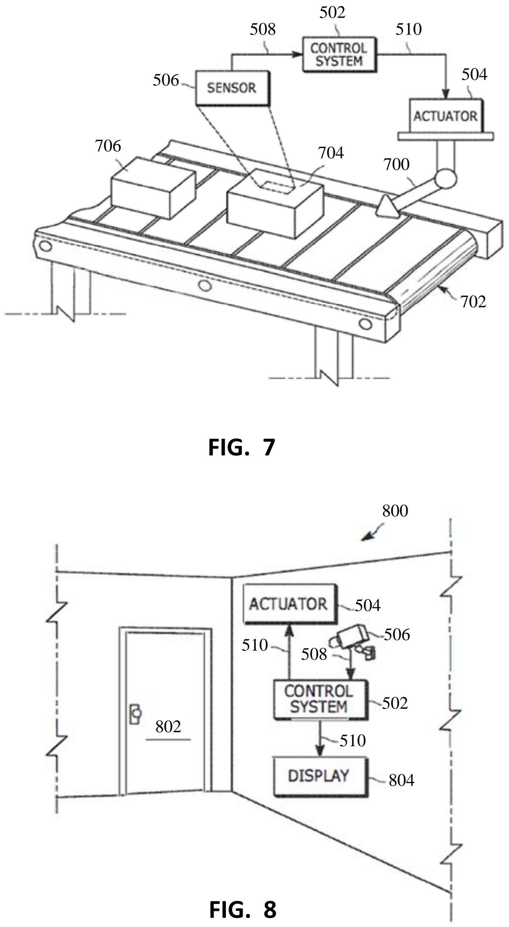

FIG. 7 depicts a schematic diagram of control system 502 configured to control a system 700 (e.g., manufacturing machine), which may include a punch cutter, a cutter, a drill, or the like, of a manufacturing system 702, such as part of a production line. Control system 502 may be configured to control actuator 504, which is configured to control the system 700 (e.g., manufacturing machine).

Sensor 506 of the system 700 (e.g., manufacturing machine) may be an optical sensor configured to capture one or objects associated with manufacturing a product 704. Classifier 514 may be configured to determine from one or more of the captured properties. Actuator 504 may be configured to control the system 700 (e.g., manufacturing machine) depending on the determined state of a manufacturing of the product 704 for a subsequent manufacturing step of manufacturing the product 704. The actuator 504 may be configured to control functions of the system 700 (e.g., manufacturing machine) on a subsequent state of the product 706 of system 700 (e.g., manufacturing machine) depending on the determined state of the product 704.

FIG. 8 is a diagram of control system 502 configured to control monitoring system 800 (e.g., a security system). Monitoring system 800 may be configured to physically control access with respect to the door 802. Sensor 506 may be configured to detect a scene that is relevant in deciding whether access is granted. Sensor 506 may be an optical sensor configured to generate and transmit image and/or video data. Such image and/or video data may be used by control system 502 to detect and classify an object (e.g., human, dog, bicycle, weapon, trash can, recycling bin, etc.) that may be in a sensing region of the sensor 506 near the door 802.

In addition, the control system 502 may be configured to generate an actuator control command 510 in response to the classification of one or more objects of the image and/or video data via the classifier 514. Control system 502 is configured to transmit the actuator control command 510 to actuator 504. In this embodiment, the actuator 504 is configured to lock or unlock door 802 in response to the actuator control command 510. In some embodiments, a non-physical, logical access control is also possible.

Monitoring system 800 may also be a surveillance system. In such an embodiment, the sensor 506 includes at least an image sensor or camera configured to detect a scene that is under surveillance and the control system 502 is configured to control display 804. Classifier 514 is configured to determine a classification of a scene, e.g. whether the scene detected by sensor 506 is suspicious. Control system 502 is configured to transmit an actuator control command 510 to display 804 in response to the classification. Display 804 may be configured to adjust the displayed content in response to the actuator control command 510. For instance, display 804 may highlight an object that is deemed suspicious by classifier 514.

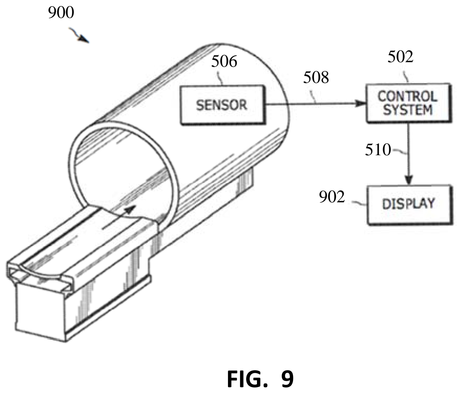

FIG. 9 depicts a schematic diagram of control system 502 configured to control imaging system 900, for example a magnetic resonance imaging (MRI) apparatus, x-ray imaging apparatus or ultrasonic apparatus. Sensor 506 may, for example, be an imaging sensor. Classifier 514 may be configured to determine a classification of all or part of the sensed image. The actuator control command 510 is selected based on the classification obtained from the classifier 514. For example, classifier 514 may interpret a region of a digital image to be potentially anomalous. In this case, the actuator control command 510 may be selected to cause display 902 to display the digital image and highlight the potentially anomalous region.

As described in this disclosure, the system 100 includes a number of advantages and benefits. For example, the system 100 includes a simple yet effective post-processing step for improving next-token generation in vision tasks by refining all the generated tokens jointly, without modifying the autoregressive model 120. The system 100 includes a lightweight self-attention module 200 to facilitate refinement with limited data and compute. This self-attention module 200 reintroduces global context to each token which leads to improved visual coherence and fidelity. Also, experimental results demonstrate notable improvements across various vision tasks like colorization, inpainting, and edge detection with supporting empirical evidence showing improvement in token-wise prediction accuracy. Also, experimental results further demonstrate that the refinement process, via the refinement network 140, enhances the quality and coherence of visual outputs, thereby improving the ability of the autoregressive model 120 to produce semantically consistent results.

In addition, the system 100 provides a number of benefits by including a post-processing technique to improve next-token based visual generation. For example, by jointly refining the tokens, the system 100 incorporates global contextual information, addressing key limitations of the next-token generation while preserving the original generative capabilities of the pretrained autoregressive model 120. Consequently, this refinement, via the refinement network 140, enhances the quality and coherence of the visual outputs across various computer vision tasks.

Also, as a post-processing step, the refinement process does not directly influence the initial autoregressive generation. Errors introduced during the sequential token generation stage are mitigated with refinement but not eliminated. This disclosure recognizes that improved results may be obtained with a tighter integration between the refinement process of the refinement network 140 and the generation process of the autoregressive model 120.

Furthermore, the above description is intended to be illustrative, and not restrictive, and provided in the context of a particular application and its requirements. Those skilled in the art can appreciate from the foregoing description that the present invention may be implemented in a variety of forms, and that the various embodiments may be implemented alone or in combination. Therefore, while the embodiments of the present invention have been described in connection with particular examples thereof, the general principles defined herein may be applied to other embodiments and applications without departing from the spirit and scope of the described embodiments, and the true scope of the embodiments and/or methods of the present invention are not limited to the embodiments shown and described, since various modifications will become apparent to the skilled practitioner upon a study of the drawings, specification, and following claims. Additionally, or alternatively, components and functionality may be separated or combined differently than in the manner of the various described embodiments and may be described using different terminology. These and other variations, modifications, additions, and improvements may fall within the scope of the disclosure as defined in the claims that follow.

## Claims

1. A computer-implemented method comprising:
receiving digital images that include image pairs and a query image, the image pairs providing context for a given task and the query image being input for the given task;
generating, via an encoder, context tokens using pixels of the image pairs and the query image;
generating, via an autoregressive model, generated tokens using the context tokens, each generated token being generated using one or more context tokens from previous time steps in a time series to create a regression;
generating, via a token embedding layer, token embeddings using the generated tokens;
generating, via a refinement network, refined embeddings using the token embeddings, the refined embeddings providing inter-token relationships with respect to the token embeddings;
generating refined tokens using the refined embeddings; and
generating, via a decoder, a new image using the refined tokens, the new image being an output of the given task based on the query image.

2. The computer-implemented method of claim 1, wherein:
the refinement network operates as an independent plug-in module alongside the autoregressive model; and
the autoregressive model is pretrained.

3. The computer-implemented method of claim 1, wherein the refinement network includes a self-attention module that generates output embeddings using the token embeddings.

4. The computer-implemented method of claim 3, wherein the refined embeddings are generated by adding the token embeddings to the output embeddings of the self-attention module.

5. The computer-implemented method of claim 1, wherein:
the encoder includes a pretrained Vector Quantized Generative Adversarial Network (VQGAN) encoder; and
the decoder includes a pretrained VQGAN decoder.

6. The computer-implemented method of claim 1, wherein the refinement network refines all of the generated tokens jointly.

7. The computer-implemented method of claim 1, wherein:
each refined token is generated by performing a search for an embedding vector that is closest to a refined embedding via a codebook; and
the codebook includes entries of refined tokens and corresponding embedding vectors.

8. The computer-implemented method of claim 1, wherein:
each image pair includes a first image that is a first type and a second image that is a second type;
the second type is an image translation of the first type;
the query image is the first type; and
the new image is the second type.

9. The computer-implemented method of claim 1, wherein the given task includes performing an inpainting task of the query image, a colorization task of the query image, or an edge detection task of the query image.

10. The computer-implemented method of claim 1, further comprising:
applying the new image in a computer vision application; and
controlling an actuator based on the computer vision application.

11. A system comprising:
one or more processors;
one or more computer memories in data communication with the one or more processors, the one or more computer memories having computer readable data stored thereon, the computer readable data including instructions that, when executed by one or more processors, causes the one or more processors to perform a method, the method including
receiving digital images that include image pairs and a query image, the image pairs providing context for a given task and the query image being input for the given task;
generating, via an encoder, context tokens using pixels of the image pairs and the query image;
generating, via an autoregressive model, generated tokens using the context tokens, each generated token being generated using one or more context tokens from previous time steps in a time series to create a regression;
generating, via a token embedding layer, token embeddings using the generated tokens;
generating, via a refinement network, refined embeddings using the token embeddings, the refined embeddings providing inter-token relationships with respect to the token embeddings;
generating refined tokens using the refined embeddings; and
generating, via a decoder, a new image using the refined tokens, the new image being an output of the given task based on the query image.

12. The system of claim 11, wherein:
the refinement network operates as an independent plug-in module alongside the autoregressive model; and
the autoregressive model is pretrained.

13. The system of claim 11, wherein the refinement network includes a self-attention module that generates output embeddings using the token embeddings.

14. The system of claim 13, wherein the refined embeddings are generated by adding the token embeddings to the output embeddings of the self-attention module.

15. The system of claim 11, wherein:
the encoder includes a pretrained Vector Quantized Generative Adversarial Network (VQGAN) encoder; and
the decoder includes a pretrained VQGAN decoder.

16. The system of claim 11, wherein the refinement network refines all of the generated tokens jointly.

17. The system of claim 11, wherein:
each refined token is generated by performing a search for an embedding vector that is closest to a refined embedding via a codebook; and
the codebook includes entries of refined tokens and corresponding embedding vectors.

18. The system of claim 11, wherein:
each image pair includes a first image that is a first type and a second image that is a second type;
the second type is an image translation of the first type;
the query image is the first type; and
the new image is the second type.

19. The system of claim 11, wherein the given task includes performing an inpainting task of the query image, a colorization task of the query image, or an edge detection task of the query image.

20. The system of claim 11, further comprising:
an actuator,
wherein,
the new image is used via a computer vision application; and
the actuator is controlled based on the computer vision application.
